# DEMANDE DE BREVET EUROPEEN

(11) **EP 0 565 454 A1**
(43) Date de publication de la demande: **13.10.1993**
(21) Numéro de dépôt: 93400933.3
(22) Date de dépôt: 09.04.1993
(51) Int. Cl.: A01K 89/016

(54) **Moulinet de pêche à la mouche**

(30) Priorité: 10.04.1992 FR 9204404
(71) Demandeur: Pinvidic, Jacques, F-13090 Aix en Provence (FR)
(72) Inventeur: Pinvidic, Jacques, F-13090 Aix en Provence (FR)
(74) Mandataire: Orès, Bernard

(57) **Abrégé**

Moulinet de pêche à la mouche, comportant un boîtier (10) formé d'une pièce annulaire (12) portant un levier d'entraînement en rotation, d'un flasque (14) portant un engrenage de démultiplication, et d'une cage (16) de bobine, le flasque (14) et la cage (16) étant montés respectivement d'un côté ou de l'autre de la pièce annulaire (12) pour permettre l'utilisation du moulinet par un droitier ou par un gaucher, respectivement.

## Description

L'invention concerne un moulinet de pêche à la mouche.

La pêche à la mouche repose sur une technique particulière de manipulation du fil de pêche qui impose l'enroulement et le déroulement de longueurs assez importantes de fil. Les moulinets qui sont spécialement conçus pour ce type de pêche comprennent en général un boîtier qui se fixe sur la canne à pêche et qui comporte une bobine d'enroulement et de déroulement du fil, montée à rotation sur un axe du boîtier. Un levier, actionnable par un doigt, permet d'entraîner avec une démultiplication importante la bobine dans le sens de l'enroulement du fil et des moyens sont prévus pour désolidariser la bobine de ces moyens d'entraînement lorsqu'on tire à la main sur le fil pour le dérouler de la bobine.

Les moulinets actuels de pêche à la mouche ont notamment pour inconvénient d'être conçus pour des droitiersp ce qui rend leur utilisation peu commode par des gauchers. De plus, leur fonctionnement est souvent assez bruyant et relativement peu fiable d'où des risques d'emmêlement du fil.

L'invention a notamment pour but d'éviter ces inconvénients des moulinets connus.

Elle a pour objet un moulinet de pêche à la mouche, dont la conception permet son utilisation par des droitiers et par des gauchers avec la même commo- d ité.

Elle a également pour objet un moulinet de ce type, dont le fonctionnement est particulièrement silencieux.

Elle a encore pour objet un moulinet de ce type, présentant une très grande fiabilité de fonctionnement.

Elle propose donc, à cet effet, un moulinet de pêche à la mouche, comprenant un boîtier, des moyens de fixation du boîtier sur une canne à pêche, une bobine de réception de fil montée rotative dans le boîtier autour d'un axe, un moyen d'entraînement à commande manuelle porté par le boîtier et associé par un engrenage de démultiplication et un mécanisme à rotation unidirectionnelle à la bobine pour entraîner celle-ci en rotation dans le sens d'enroulement du fil et pour lui permettre de tourner librement autour dudit axe dans le sens de déroulement du fil, ce moulinet étant caractérisé en ce que le boîtier est constitué d'au moins deux pièces assemblées fixement l'une à l'autre et comprenant une pièce annulaire portant le moyen d'entraînement à commande manuelle, un flasque portant l'engrenage de démultiplication et le mécanisme à rotation unidirectionnelle, et des moyens de montage du flasque sur une face ou sur l'autre de la pièce annulaire pour permettre l'utilisation du moulinet parun droitier ou parun gaucher, respectivement.

Il suffit donc, selon l'invention, de monter le fiasque du boîtier sur une face ou sur l'autre de la pièce annulaire du boîtier pour que le moulinet puisse être utilisé exactement de la même façon par un droitier ou par un gaucher, la bobine d'enroulement et de déroulement du fil étant montée sur la face de la pièce annulaire laissée libre par le flasque et étant ainsi située d'un côté ou de l'autre de la canne, pour être visible et accessible selon que le pêcheur tient la canne de la main gauche ou de la main droite.

Le boîtier comprend également une troisième pièce, formant cage de la bobine et montée sur la face de la pièce annulaire qui est opposée à la face recevant le flasque précité.

Dans une première forme de réalisation de l'invention, l'arbre de rotation de la bobine est porté par le flasque du boîtier, et les moyens de fixation du boîtier sur la canne sont portés par la pièce annulaire du boîtier.

Dans une autre forme de réalisation de l'invention, l'arbre de rotation de la bobine est monté de façon excentrée sur un flasque additionnel sur lequel le boîtier est fixé de façon réglable en position angulaire autour dudit arbre, ce flasque additionnel comportant alors les moyens de fixation sur la canne.

La rotation du boîtier sur le flasque additionnel fixé sur la canne permet de rapprocher ou d'écarter de la canne le moyen manuel d'entraînement de la bobine, par exemple un levier, en fonction de la taille des doigts du pêcheur.

Avantageusement, le mécanisme à rotation unidirectionnelle précité est un mécanisme de roue libre, par exemple à billes ou à aiguilles, qui est agencé entre le moyen d'entraînement et l'engrenage de démultiplication.

Le fonctionnement d'un tel mécanisme de roue libre est particulièrement silencieux.

En variante, le mécanisme à rotation unidirectionnelle est du type à crabot ou à roue à rochet.

Selon une autre caractéristique avantageuse de l'invention, la bobine est montée par clipsage sur l'arbre du boîtier.

On évite ainsi les inconvénients de certains moulinets connus, dans lesquels la bobine est fixée par une vis sur l'arbre du boîtier, vis qui est susceptible de se dévisser et de tourner lors de la rotation de la bobine.

Selon encore une autre caractéristique avantageuse de l'invention, la bobine comporte un disque axial de freinage en appui sur une rondelle portée par un élément de l'engrenage de démultiplication, des moyens à vissage étant prévus sur cet élément pour régler la force d'appui du disque de freinage de la bobine sur la rondelle précitée.

On peut ainsi régler à volonté la force de freinage qui s'oppose au déroulement du fil. De plus, le déroulement du fil se traduit alors par le frottement doux d'un disque sur une rondelle et ne provoque pas de bruit.

De façon générale, le moulinet de pêche à la mouche selon l'invention est d'une conception simple et particulièrement fiable, d'utilisation agréable et commode, et de fonctionnement silencieux.

L'invention sera mieux comprise et d'autres caractéristiques, détails et avantages de celle-ci apparaîtront plus clairement à la lecture de la description qui suit, faite en référence aux dessins annexés dans lesquels:
la figure 1 est une vue schématique de face d'un moulinet selon l'invention, la bobine de réception de fil étant retirée;
la figure 2 est une vue schématique de côté, en demi-vue extérieure et en demi-vue en coupe selon la ligne II-II de la figure 1;
la figure 3 est une vue schématique partielle d'une variante de réalisation;
la figure 4 est une vue schématique de face d'une autre variante de réalisation du moulinet selon l'invention;
la figure 5 est une vue de côté du moulinet de la figure 4;
les figures 6 et 7 sont des vues schématiques de face d'autres variantes de réalisation.

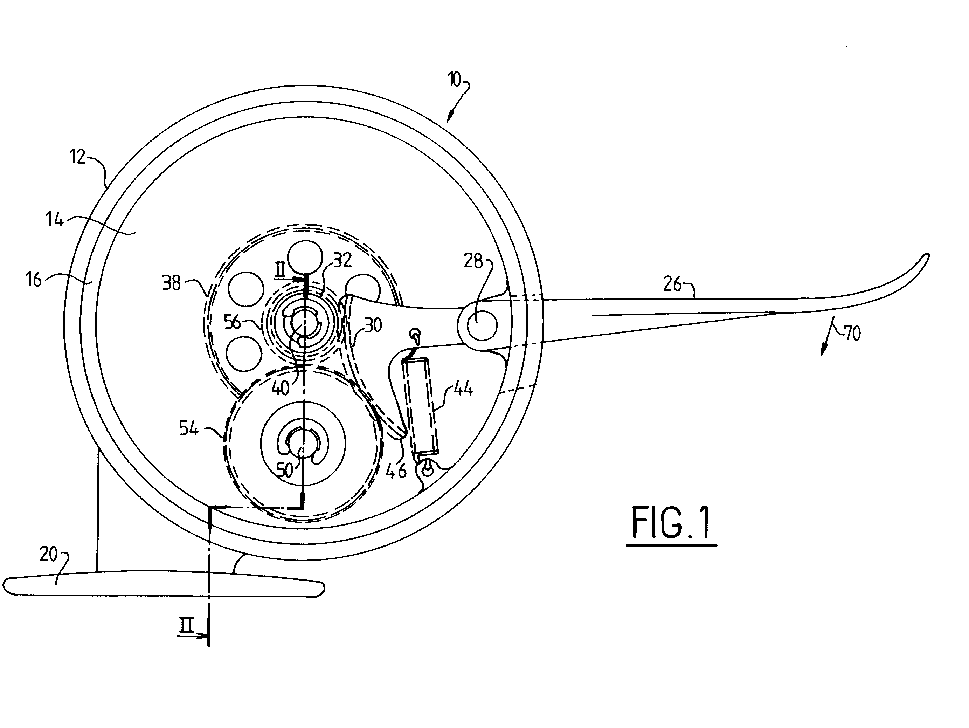

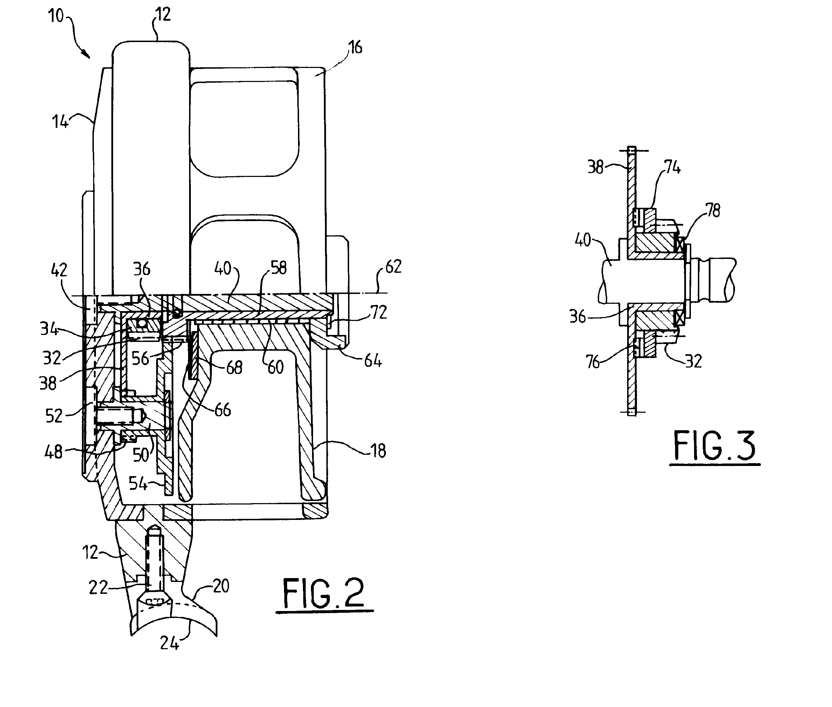

On se réfère d'abord aux figures 1 et 2, dans lesquelles on a représenté une première forme de réalisation du moulinet selon l'invention.

Ce moulinet comprend un boîtier, désigné généralement par la référence 10 et qui est constitué d'une pièce annulaire 12, d'un flasque 14 et d'une cage 16 dans laquelle tourne une bobine 18 de réception de fil de pêche. Comme on le voit bien sur la figure 2, les deux faces de la pièce annulaire 12 sont parfaitement symétriques l'une de l'autre, et conçues chacune pour recevoir soit le flasque 14, soit la cage 16 de la bobine. Ces trois pièces sont assemblées l'une à l'autre par collage, par clipsage ou encliquetage élastique, par vissage ou par tout autre moyen approprié.

La pièce annulaire 12 du boîtier porte, sur sa périphérie extérieure, une pièce 20 de fixation sur la canne à pêche, fixée à la pièce annulaire 12 par une ou deux vis 22, de façon à être orientable d'un côté ou de l'autre de cette pièce annulaire selon que le moulinet est utilisé par un droitier ou un gaucher.

On notera que la partie 24 d'application de la pièce 20 sur la canne à pêche est déportée latéralement, pour un meilleur équilibrage du moulinet monté sur la canne.

La pièce annulaire 12 du boîtier porte également un levier d'entraînement 26 de forme classique, qui pivote sur la pièce annulaire 12 autour d'un axe transversal 28 parallèle à l'axe de rotation de la bobine 18, comme on le verra ci-après.

La queue du levier 26 est sensiblement parallèle à la canne et la tête de ce levier, qui s'étend à l'intérieur du boîtier 10, comporte un secteur denté 30 qui est en prise avec un pignon 32 formant la cage extérieure d'un mécanisme de roue libre 34 à billes ou à aiguilles et dont la cage intérieure est constituée par le moyeu 36 d'une roue dentée 38 montée libre en rotation sur un arbre transversal 40 fixé au centre du flasque 14 par une vis 42, et qui s'étend parallèlement à l'axe 28 de rotation du levier.

La tête du levier 26 à l'intérieur du boîtier 10 est également reliée à la périphérie de la pièce annulaire 12 par un ressort de traction 44 formant moyen de rappel du levier 26 dans sa position de repos. Cette position de repos peut être déterminée par appui de l'extrémité 46 du secteur denté 30 du levier sur une butée radiale non représentée, réglable en position par vissage ou dévissage sur la périphérie de la pièce annulaire 12.

La roue dentée 38 est elle-même en prise, à sa périphérie, avec un pignon 48 de petit diamètre porté par un arbre transversal 50 fixé par une vis 52 sur le flasque 14 du boîtier 10. Le moyeu du pignon 48 de petit diamètre est solidaire, à distance de ce pignon 48, d'une roue dentée 54 de plus grand diamètre, qui est elle-même en prise à sa périphérie avec un pignon 56 formé à l'extrémité d'un manchon 58 enfilé sur l'arbre transversal 40 et immobilisé axialement par clipsage ou encliquetage élastique sur celui-ci. Le manchon 58 s'étend axialement à l'intérieur de la cage 16 et supporte la bobine 18 par l'intermédiaire d'une bague en bronze 60 ou analogue, la bobine 18 étant ainsi montée libre en rotation sur le manchon 58 autour de l'axe 62 de l'arbre transversal 40.

L'extrémité du manchon 58 extérieure à la cage 16 est filetée et reçoit un écrou 64 qui, par vissage sur l'extrémité filetée du manchon 58, s'applique sur la partie centrale de la bobine 18 et vient la pousser en direction du pignon 56 formé à l'autre extrémité du manchon 58. Les faces en regard du pignon 56 et de la partie centrale de la bobine 18 portent respectivement une rondelle en acier 66 et un disque de freinage 68 qui sont appliqués l'un sur l'autre avec une force déterminée par le vissage de l'écrou 64 sur l'extrémité filetée du manchon 58.

Le fonctionnement de ce moulinet est le suivant :
lorsque le pêcheur, tenant la canne à pêche appuie avec l'index sur la queue du levier 26 pour le faire pivoter dans le sens indiqué par la flèche 70 autour de l'axe 28, il entraîne le pignon 32 formé sur la cage extérieur du mécanisme de roue libre 34, et la roue dentée 38 est entraînée en rotation dans le sens contraire des aiguilles d'une montre en figure 1. Quand l'utilisateur relâche le levier 26, celui-ci est ramené dans sa position de repos par le ressort de traction 34, ce mouvement de retour n'a aucun effet sur la roue dentée 38, grâce au mécanisme de roue libre 34.

La rotation de la roue dentée 38 est transmise par le pignon 48 de petit diamètre à la roue dentée 54 de plus grand diamètre, qui entraîne en rotation le manchon 58 portant la bobine 18. La rotation du manchon 58 est transmise à la bobine 18 par l'intermédiaire de la rondelle 66 et du disque de freinage 68, lorsque l'écrou 64 est correctement vissé sur l'extrémité filetée du manchon 58. La bobine 18 est ainsi entraînée en rotation dans le sens correspondant à l'enroulement du fil de pêche. La démultiplication relativement importante entre le levier 26 et le manchon 58 fait que la bobine 18 continue à tourner dans le sens de l'enroulement du fil, par inertie, après que l'on ait relâché le levier 26.

Inversement, lorsque le pêcheur souhaite dérouler le fil, il lui suffit de tirer à la main sur le fil à la sortie de la bobine 18 avec un effort suffisant pour vaincre l'effort de freinage résultant de l'appui du disque 68 sur la rondelle 66 portée par le manchon 58. Cet effort est réglable à volonté par vissage ou dévissage de l'écrou 64. Le déroulement du fil ne provoque pas de bruit particulier, non plus d'ailleurs que l'enroulement du fil sur la bobine 18.

On remarquera que !'écrou 64 est imperdable, en étant retenu par un circlips sur l'extrémité du manchon 58.

Pour empêcher la rotation de l'écrou 64 sur l'extrémité filetée du manchon 58 quand la bobine tourne dans le sens du déroulement du fil, on peut intercaler une rondelle, de préférence à faible coefficient de frottement, entre l'écrou et l'extrémité du manchon, cette rondelle étant déplaçable en translation sur l'extrémité du manchon et fixe en rotation, par exemple au moyen d'un doigt engagé dans une rainure longitudinale du manchon, d'un méplat, ou autre moyen analogue. Dans ces conditions, la rotation de la bobine sur le manchon ne provoque pas la rotation de l'écrou.

Comme représenté schématiquement en figure 3, le mécanisme de roue libre 34, du type à billes ou à aiguilles, peut être remplacé par un mécanisme à crabots. Dans ce cas, le pignon 32, en prise avec le secteur denté 30 du levier 26 est monté tournant sur le moyeu 36 de la roue dentée 38 et comporte une couronne circulaire 74 dont la face située en regard de la roue dentée 38 présente des dents de crabot 76 en prise avec des dents semblables formées sur la face correspondante de la roue dentée 38. Un petit ressort 78 pousse constamment le pignon 32 sur la roue dentée 38.

Dans ces conditions, le pivotement du levier 26 dans le sens de la flèche 70 entraîne la rotation de la roue dentée 38 par l'intermédiaire des dents de crabot 76, tandis que le pivotement du levier 26 dans le sens contraire à la flèche 70 n'a aucun effet sur la roue dentée 38, les dents de crabot 76 glissant sur les dents correspondantes de la roue dentée 38.

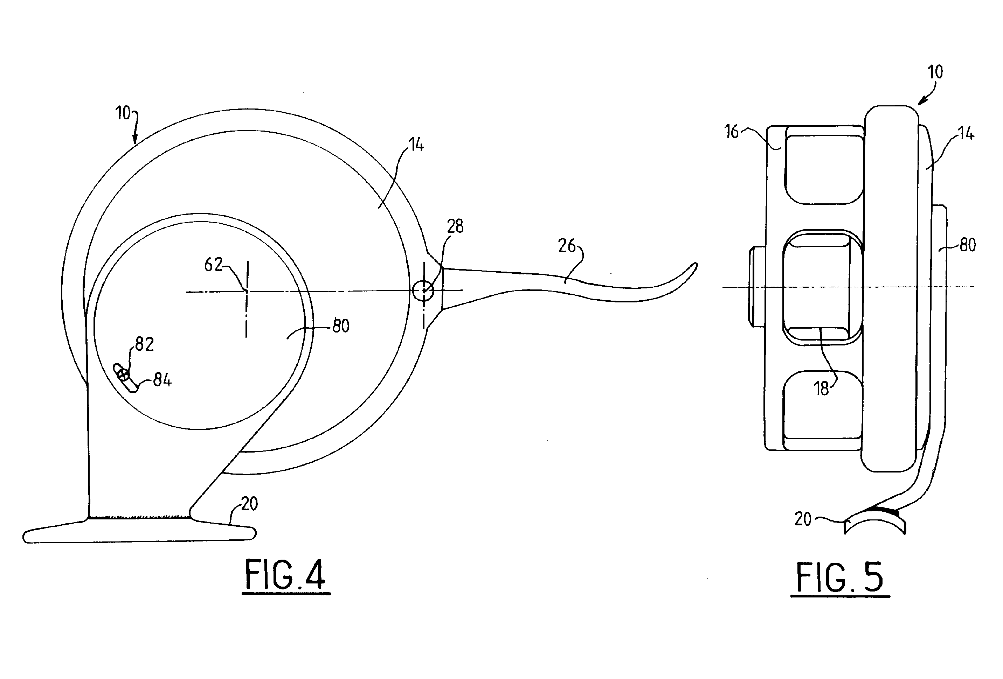

Dans la variante de réalisation représentée aux figures 4 et 5, le boîtier 10 du moulinet est sensiblement identique à celui représenté dans les figures 1 et 2, mais l'arbre 40 de rotation de la bobine 18 estfixé de façon excentrée sur un flasque supplémentaire 80 au lieu d'être fixé sur le flasque 14. Ce flasque supplémentaire 80 est appliqué sur le flasque 14 du boîtier 10 et porte la pièce 20 de montage ou de fixation du moulinet sur une canne à pêche. Le montage excentré de l'arbre 40 (dont on n'a représenté que l'axe 62 en figures 4 et 5) sur le flasque 80 permet, par rotation du boîtier 10 autour de l'axe 62 de l'arbre 40, de régler la distance entre la queue du levier 26 et la canne à pêche en fonction de la taille des doigts de l'utilisateur. Une vis de blocage 82, engagée dans une lumière incurvée 84 du flasque 80, permet d'immobiliser le boîtier 10 en rotation sur le flasque 80, dans la position angulaire voulue.

On notera également que, dans cette variante de réalisation, la pièce 20 de fixation sur la canne à pêche est solidaire du flasque 80.

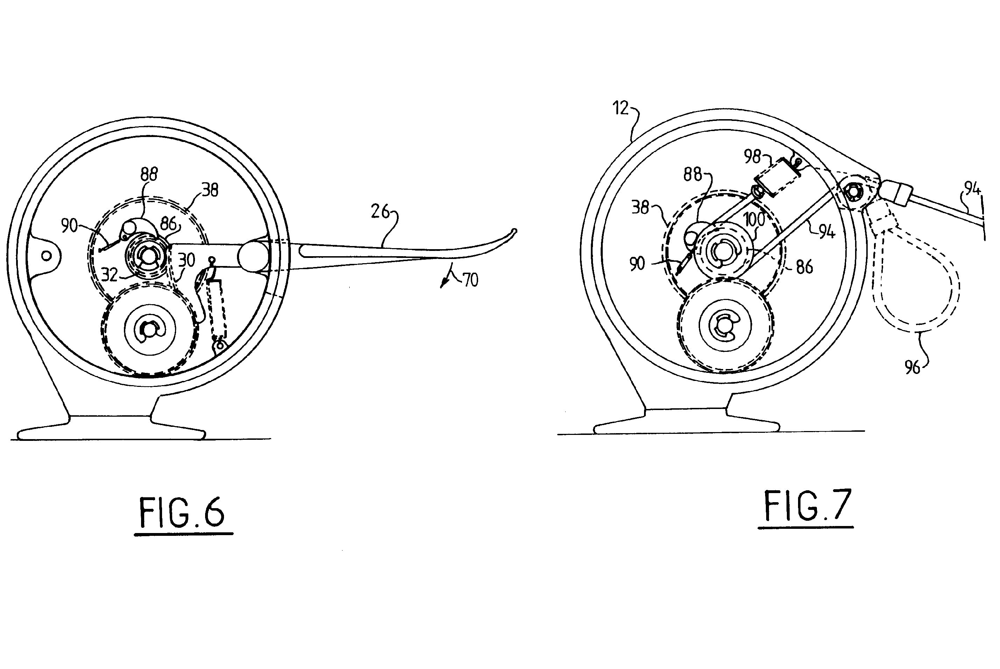

La figure 6 représente schématiquement une variante de réalisation, qui diffère des réalisations précédentes en ce que le mécanisme à rotation unidirectionnelle est constitué par une roue à rochet associée à un :cliquet basculant. Dans cette variante de réalisation, le pignon 32, qui est en prise avec le secteur denté 30 du levier 26, est solidaire d'une roue à rochet 86 coopérant avec un cliquet basculant 88 associé à un ressort de rappel 90. Le cliquet basculant 88 et le ressort 90 sont portés par la roue dentée 38, identique à celle du mode de réalisation des figures 1 et 2.

Lorsque le levier 26 est entraîné dans le sens indiqué par la flèche 70, son secteur denté 30 fait tourner le pignon 32 et la roue à rochet 86 dans le sens contraire des aiguilles d'une montre en figure 6. Dans ce sens de rotation, le cliquet 88 est engagé dans les dents de la roue à rochet, de telle sorte que la roue dentée 38 est également entraînée en rotation dans le sens contraire des aiguilles d'une montre.

Lorsque le levier 26 est ramené en position de repos par son ressort de rappel, la roue à rochet 86 est entraînée en rotation dans le sens des aiguilles d'une montre en figure 6 en échappant au cliquet 88, de sorte que la roue dentée 38 n'est alors pas entraînée en rotation.

Pour le reste, la structure du moulinet est identique à celle du mode de réalisation des figures 1 et 2 ou des figures 4 et 5.

La figure 7 représente schématiquement une autre variante de réalisation, dans laquelle le levierd'entraînement 26 est remplacé par un système rotatif à câble de traction.

Dans ce cas, la partie annulaire 12 du boîtier 10 comporte un orifice 92 de guidage d'un câble de traction 94 qui, à l'extérieur du boîtier, se termine par une boucle ou un anneau de traction 96 (représenté en trait fantôme en figure 7) et qui, à son autre extrémité, est relié par un ressort de rappel 98 à la face intérieure de la pièce annulaire 12. Le câble de traction 94 passe dans la gorge d'une poulie 100 montée sur l'axe de rotation de la bobine et solidaire d'une roue à rochet coaxiale 86 coopérant avec un cliquet basculant 88 associé à un ressort de rappel 90 pour former un mécanisme à rotation unidirectionnelle comme dans le mode de réalisation de la figure 6, le cliquet et son ressort de rappel étant portés par la roue dentée 38.

Lorsqu'on tire sur l'anneau 96 du câble de traction 94 sur quelques centimètres à partir de la position représentée en trait fantôme en figure 7, on entraîne la poulie 100, et donc la roue à rochet et la roue dentée 88 (par l'intermédiaire du cliquet 88) en rotation dans le sens contraire des aiguilles d'une montre. Lorsqu'on relâche l'anneau 96 du câble de traction, le ressort de rappel 98 fait tourner la poulie 100 dans le sens des aiguilles d'une montre, sans effet d'entrai- nement sur la roue dentée 38.

Pour le reste, le moulinet de la figure 7 est identique à celui des figures 1 et 2 ou à celui des figures 4 et 5.

## Revendications

1. Moulinet de pêche à la mouche, comprenant un boîtier (10), des moyens (20) de fixation du boîtier sur une canne à pêche, une bobine (18) de réception de fil montée rotative dans le boîtier autour d'un axe (62), un moyen (26, 94) d'entraînement à commande manuelle porté par le boîtier et associé par un engrenage de démultiplication et un mécanisme à rotation unidirectionnelle (34) à la bobine pour entraîner celle-ci en rotation dans le sens d'enroulement du fil et pour lui permettre de tourner librement-autour.dudit axe (62) dans le sens de déroulement du fil, caractérisé en ce que le boîtier (10) est constitué d'au moins deux pièces (12, 14) assemblées fixement l'une à l'autre et comprenant une pièce annulaire (12) portant le moyen d'entraînement à commande manuelle, un flasque (14) portant l'engrenage de démultiplication et le mécanisme à rotation unidirectionnelle, et des moyens de montage du flasque (14) sur une face ou sur l'autre de la pièce annulaire (12) pour permettre l'utilisation du moulinet par un droitier ou par un gaucher, respectivement.

2. Moulinet selon la revendication 1, caractérisé en ce que le boîtier (10) comprend une troisième pièce (16) formant cage de la bobine et montée sur la face de la pièce annulaire (12) opposée à la face recevant le flasque (14) précité.

3. Moulinet selon la revendication 1 ou 2, caractérisé en ce que l'arbre (40) de rotation de la bobine est porté par le flasque (14) du boîtier.

4. Moulinet selon l'une des revendications précédentes, caractérisé en ce que les moyens (20) de fixation sur la canne sont portés par la pièce annulaire (12) du boîtier.

5. Moulinet selon la revendication 1 ou 2, caractérisé en ce que l'arbre (40) de rotation de la bobine est monté de façon excentrée sur un flasque additionnel (80) sur lequel le boîtier est fixé de façon réglable en position angulaire autour dudit arbre (40), ce flasque additionnel (80) comportant les moyens (20) de fixation sur la canne.

6. Moulinet selon l'une des revendications précédentes, caractérisé en ce que la bobine (18) est montée par clipsage sur l'arbre (40) du boîtier.

7. Moulinet selon l'une des revendications précédentes, caractérisé en ce que la bobine (18) comporte un disque axial de freinage (68) en appui sur une rondelle (66) portée par un élément (56, 58) de l'engrenage de démultiplication, des moyens à vissage (64) étant prévus sur cet élément (56, 58) pour régler la force d'appui du disque de freinage (68) de la bobine sur la rondelle (66) précitée.

8. Moulinet selon l'une des revendications précédentes, caractérisé en ce que le mécanisme à rotation unidirectionnelle (34) est un mécanisme de roue libre, par exemple à billes ou à aiguilles, à fonctionnement silencieux et qui est agencé entre le moyen d'entraînement (26) et l'engrenage de démultiplication.

9. Moulinet selon l'une des revendications 1 à 7, caractérisé en ce que le mécanisme à rotation unidirectionnelle est du type à crabots (76) monté sur l'arbre (40) de rotation de la bobine, ou comporte une roue à rochet (86) associée à un cliquet pivotant (88) porté par une roue dentée (38) de l'engrenage de démultiplication.

10. Moulinet selon l'une des revendications précédentes, caractérisé en ce que le moyen d'entraînement est un levier (26) monté pivotant sur la pièce annulaire (12) du boîtier et associé à un ressort de rappel, ce levier comprenant un secteur denté (30) en prise avec le mécanisme à rotation unidirectionnelle (34).

11. Moulinet selon une des revendications 1 à 9, caractérisé en ce que le moyen d'entraînement comprend un câble de traction (94) passant sur une poulie (100) reliée par le mécanisme à rotation unidirectionnelle à l'engrenage de démultiplication, ce câble de traction étant relié à une extrémité par un ressort de rappel (98) à la pièce annulaire (12) du boîtier et passant à son autre extrémité dans un orifice de guidage (92) de cette pièce annulaire (12).
